**Europäisches Patentamt**

**European Patent Office**

**Office européen des brevets**

(19)

(11) Publication number: **0 410 522 B1**

## EUROPEAN PATENT SPECIFICATION

(12)

(45) Date of publication of patent specification :
**11.05.94 Bulletin 94/19**

(51) Int. Cl.⁵ : **F17D 3/05, F17D 1/00, F16L 58/00**

(21) Application number : **90201975.1**

(22) Date of filing : **19.07.90**

(54) **Method and apparatus for preventing slug growth in a pipeline.**

(30) Priority : **25.07.89 GB 8917026**

(43) Date of publication of application :
**30.01.91 Bulletin 91/05**

(45) Publication of the grant of the patent :
**11.05.94 Bulletin 94/19**

(84) Designated Contracting States :
**DE DK ES FR GB IT NL**

(56) References cited :
**EP-A- 0 331 295**
**GB-A- 2 014 862**

(56) References cited :
**US-A- 4 708 793**
**US-A- 4 760 742**
**PIPELINE AND GAS JOURNAL November 1974, Dallas, U.S.A. pages 46 - 52; R.G.TANERINI: "Gas Flow Computer Cuts Demand Penalties By -3000 Per Month"**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Van der Steeg, Jan**
**Badhuisweg 3**
**NL-1031 CM Amsterdam (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a method for preventing slug growth in a pipeline system during simultaneous transportation of a gas and a liquid through the pipeline system. In the offshore industry it is common practice that oil and gas are simultaneously transported as a multiphase fluid mixture through a subsea pipeline to a gas/liquid separator on a platform structure. The multiphase fluid mixture may consist of alternating batches of liquid and gas. Under certain flow conditions growth of liquid slugs may easily occur, leading to severe slugging i.e. producing a flow pattern of alternating production starvation (no flow), large liquid slugs and strong gas surges at the exit of the pipeline system. Supplying such an alternating pattern of liquid slugs and gas surges to a gas/liquid separator reduces strongly the separation efficiency of the separator, as the gas/liquid separator must be operated with acceptable pressure fluctuations and should deliver an acceptably low liquid content in the gas outlet conduit and an acceptably low gas content in the liquid outlet conduit.

A method for preventing slug growth in a pipeline system during simultaneous transportation of a gas and a liquid through the pipeline system is disclosed in Oil & Gas Journal, Nov. 12, 1979. In this known method a valve is arranged at the top of a riser, which valve is manually or automatically regulated so as to minimize the pipeline pressure upstream of the riser and to minimize the differential pressure fluctuations in the riser. Transmitters are used to transmit pressure signals for regulating the valve, which transmitters are installed at a subsea part of the pipeline system. The known method is based on the assumptions that severe slugging only occurs in pipelines having a section of downward inclination when seen in the direction of flow and that slug growth can be prevented by regulating the volumetric fluid flux as a function of fluid pressure variations. In another method slug formation is prevented by choking with a constant orifice at the downstream end of the pipeline.

In the specification and in the claims the word "flux" is used to denote volumetric flow rate or superficial velocity (which is equal to the volumetric flow rate divided by the cross-sectional area of the conduit).

However, severe slugging may also occur in pipelines without a section of downward inclination. Slugging may in fact occur in any pipeline system transporting both liquid and gas.

An object of the invention is to provide an improved method and apparatus for preventing severe slugging in a pipeline system. It is a further object to prevent slugging in such systems without the need of having pressure transmitters at a subsea part of the system.

In accordance with the invention a method for preventing slug growth in a pipeline system during simultaneous transportation of gas and liquid through the pipeline system comprises the steps of:

- providing flux control means for controlling fluxes of gas and liquid in a section of the pipeline system;
- determining a fluid flux, defined as the sum of the fluxes of gas and liquid, in said section; and
- adjusting the flux control means to minimize variations of the fluid flux in said section using the measured fluid flux as an input for the flux control means adjustment.

The invention also relates to a pipeline system having means for preventing slug growth therein during simultaneous transportation of gas and liquid through the pipeline system, and to the means itself, said means comprising:

- flux control means for controlling fluxes of gas and liquid in a section of the pipeline system;
- means for determining a fluid flux, defined as the sum of the fluxes of the gas and the liquid, in said section; and
- means for adjusting the flux control means to minimize variations of the fluid flux in said section using the measured fluid flux as an input for the flux control means adjustment.

It is considered that severe slugging may be caused by two different physical mechanisms, namely:

1) liquid accumulating at a low point in the pipeline system and blocking the gas flow; and
2) a liquid slug reducing the velocity and thus the fluid flux in the pipeline slightly as it passes an upwardly inclined part of the pipeline, thereby causing a slight increase of gas pressure and liquid hold-up upstream the upwardly inclined part for example a riser.

As the liquid slug leaves the upwardly inclined part the flow accelerates slightly due to the increased gas pressure. A next slug upstream the slug leaving the upwardly inclined part is also accelerated and thereby sweeps the increased liquid hold-up. Therefore this next slug grows somewhat, leading to intensified subsequent fluctuations in velocity. In this way liquid slugs of increasing lengths occur and are discharged from the pipeline system. The second mechanism may support the first mechanism, but it was found to occur also when a low point in the pipeline system is absent.

To prevent this severe slugging, the control criterion is to maintain a substantially constant mixture velocity.

Preferably the section is the downstream end of a pipeline system which is located on a platform or on shore.

In a suitable embodiment of the invention, velocity fluctuations of liquid slugs and strong gas surges are suppressed by minimising differences between an instantaneous volumetric fluid flux (U(t)) and a mean volumetric fluid flux ($U_m$). The mean volumetric fluid flux ($U_m$) is defined as the time-average of the instantaneous volumetric fluid flux (U(t)) in said section.

Advantageously the step of adjusting the flux control means is carried out using a regulating device which receives input signals representing the fluid flux in the section. In this manner the flux control means are adjusted adequately.

More advantageously the pipeline system includes a gas/liquid separator which is equipped with a gas outlet conduit and a liquid outlet conduit, the steps of determining the fluid flux and adjusting the flux control means comprising:

- measuring an instantaneous liquid flux by means of a liquid volumetric flow meter in the liquid outlet conduit of the separator;
- measuring an instantaneous gas flux by means of a gas volumetric flow meter in the gas outlet conduit of the separator;
- inducing the regulating device to determine the fluid flux by adding the instantaneously measured gas and liquid fluxes;
- inducing the regulating device to obtain a time average of the fluid flux over a relatively long interval of time;
- inducing the regulating device to adjust the flux control means to minimize a deviation of the fluid flux from said time average of said flux.

By measuring the instantaneous fluxes of gas and liquid separately, accurate magnitudes of the fluid flux and the time-average of the fluid flux are obtained.

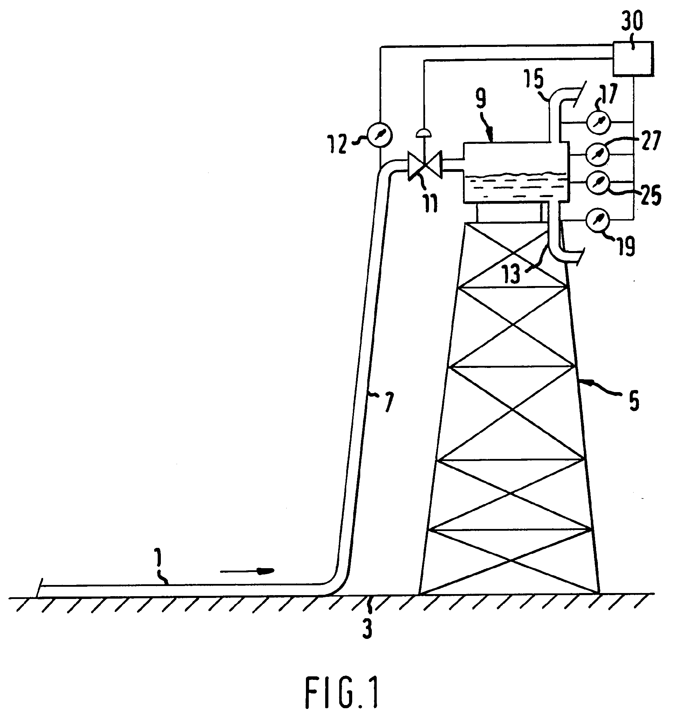

The invention will now be described by way of example with reference to Figure 1, showing a pipeline system for carrying out the method according to the invention.

The pipeline system comprises a pipeline 1 extending on the seafloor 3 from a wellhead (not shown) to an offshore platform 5, an upwardly inclined pipeline section in the form of a riser 7 connected to the platform 5, a gas/liquid separator 9, a liquid outlet conduit 13 and a gas outlet conduit 15 of the separator 9. The upper end of the riser 7 is the downstream end of the pipeline system.

The riser 7 is at its upper part provided with flux control means in the form of a control valve 11 for controlling the fluid flow through the riser 7. The valve 11 may comprise a vortex amplifier as disclosed in The Oilman, August 1987, pp. 82-85. A pressure gauge 12 is provided at the upper part of the riser 7 and upstream the control valve 11. A gas volumetric flow meter 17 is provided in the gas outlet conduit 15 and a liquid volumetric flow meter 19 is provided in the liquid outlet conduit 13. The separator 9 is further provided with a liquid level gauge 25 and a pressure gauge 27. The gas flow meter 17, the liquid flow meter 19, the liquid level gauge 25, the pressure gauge 12 and the pressure gauge 27 are linked to a regulating device 30 for regulating the control valve 11.

During operation of the pipeline system shown in Figure 1, a mixture of gas and liquid flows from the wellhead through the underwater pipeline 1 and riser 7 into the gas/liquid separator 9, thereby passing through the pressure gauge 12 and the control valve 11. Gas is discharged from the separator 9 through the gas outlet conduit 15 and liquid through the liquid outlet conduit 13. The volumetric gas flux in the gas outlet conduit 15 is continuously measured using the gas volumetric flow meter 17 and the volumetric liquid flux in the liquid outlet conduit 13 is continuously measured using the liquid volumetric flow meter 19. The liquid level in the separator 9 is continuously measured using the liquid level gauge 25 and the pressure in the separator 9 is continuously measured using the pressure gauge 27. The pressure in the upper part of the riser is continuously measured using the pressure gauge 12.

The regulating device 30 uses the instantaneous volumetric gas flux ($U_g(t)$) measured by the gas volumetric flow meter 17 and the instantaneous volumetric liquid flux ($U_l(t)$) measured by the liquid volumetric flow meter 19 as input parameters. The instantaneous volumetric fluid flux (U(t)) is calculated by the regulating device 30 as

$$U(t) = U_g(t) + U_l(t);$$

and the mean volumetric fluid flux $U_m$ is subsequently calculated by the device 30 as the time-average of U(t).

When a liquid slug enters the riser the flow decelerates, so a decrease in U(t) will be monitored by the regulating device 30. Thus, an increasing difference between U(t) and $U_m$ will occur. The control valve 11 is now gradually further opened by the regulating device 30 until the difference between U(t) and $U_m$ vanishes or becomes very small.

Experiments have been carried out in a pipeline system comprising a horizontal section of 50 m length, a declining section of 50 m length (angle of declination 2° to the horizontal plane), and a (vertical) riser section of 16.2 m length. At the upstream end of the pipeline system a vessel of 230 l (litres) has been joined to the system, this vessel simulates another horizontal section of 120 m length. The internal diameter of the sections was 0.05 m. At the top of the riser, the downstream end of the pipeline system, there is provided a separator. During the test the separator was drained at a constant rate which is equal to the volumetric flowrate of the liquid at the upstream end of the pipeline system.

Tests were carried out with an air/water fluid mixture wherein water contained 20 %w mono-ethylene glycol, the superficial gas velocity and the superficial liquid velocity at the upstream end of the pipeline were 0.4 m/s and 0.18 m/s, respectively, and the length of the flowline is such that severe slugging occurred.

The liquid content in the separator fluctuated with 1.5 times the volume of the riser and the gas velocity peaked to 12 m/s at the end of a period in which there is no flow or production starvation.

With the system according to the invention wherein the variations in the volumetric flow rate of the mixture gas and liquid exiting the riser are minimized, it was found that the level variations were reduced, the gas velocity was equal to 0.4 m/s ± 0.8 m/s and there was no production starvation.

When during slug production the tail of a liquid slug passes the base of the riser 7, the hydrostatic pressure drop over the riser 7 decreases, so the high pressure gas upstream the slug tends to accelerate the remaining part of the slug in the riser 7. During this phase the valve 11 is gradually closed by the regulating device 30 so as to avoid an increase of U(t) to a value above $U_m$.

The pressure gauge 12 is used to monitor long term pressure changes in the riser 7, i.e. pressure changes over longer periods of time than those of pressure fluctuations owing to the intermittent flow of slugs through the riser 7. Long term pressure changes may occur due to a discrepancy between the mass fluxes at the inlet, which are set, and at the outlet of the pipeline system. Such a discrepancy implies that the magnitude of $U_m$, as used by the regulating device 30 to minimise differences between U(t) and $U_m$, is incorrect. If a long term pressure increase is monitored said magnitude of $U_m$ is increased, and similarly if a long term pressure decrease is monitored said magnitude of $U_m$ is decreased.

In an alternative method according to the invention, the pipeline system includes a gas/liquid separator which is equipped with a gas outlet conduit provided with a first control valve and a liquid outlet conduit provided with a second control valve, and the step of adjusting the flux control means comprises adjusting said control valves in response to variations of the fluid flux. In this embodiment control valve 11 upstream of the separator 9 is not present.

Normal operation of the alternative installation is similar to normal operation of the installation with reference to Figure 1, except that the control valves of the liquid outlet conduit and the gas outlet conduit of the separator are operated in a way so as to minimise the difference between U(t) and $U_m$, instead of a control valve in the upper part of the riser.

The fluid flux (being the sum of the fluxes) is direct proportional to the product of the pressure drop over the control valve 11 and the size of the valve's opening of flow. Thus, the pressure drop is an indicator for the fluid flux and the control valve 11 can be adjusted in response to variations in the pressure drop over the valve to minimize variations in the fluid flux.

## Claims

1. A method for preventing slug growth in a pipeline system (1) during simultaneous transportation of gas and liquid through the pipeline system (1), the method comprising the steps of:
   - providing flux control means (11) for controlling fluxes of gas and liquid in a section (7) of the pipeline system (1);
   - determining a fluid flux, defined as the sum of the instantaneous fluxes of the gas and the liquid, in said section (7); and
   - adjusting the flux control means (11) to minimize variations of the fluid flux in said section (7) using the measured fluid flux as an input for the flux control means adjustment.

2. The method of claim 1, wherein the step of adjusting the flux control means (11) is carried out using a regulating device (30) which receives input signals representing the fluid flux in said section (7).

3. The method of claim 2, wherein the pipeline system (1) includes a gas/liquid separator (9) which is equipped with a gas outlet conduit (15) and a liquid outlet conduit (13), and wherein the steps of determining the fluid flux and adjusting the flux control means (11) comprise:
   - measuring an instantaneous liquid flux by means of a liquid volumetric flow meter (19) in the liquid outlet conduit (13) of the separator (9);
   - measuring an instantaneous gas flux by means of a gas volumetric flow meter (17) in the gas outlet conduit (15) of the separator (9);
   - inducing the regulating device (30) to determine the fluid flux by adding the instantaneously measured gas and liquid fluxes;
   - inducing the regulating device (30) to calculate a time average of the fluid flux over a relatively long interval of time;
   - inducing the regulating device (30) to adjust the flux control means (11) to minimize a deviation of the fluid flux from said time average of said flux.

4. The method of any one of claims 1-3, wherein the pipeline system (1) includes a control valve (11) at or near the downstream end of said section (7), and wherein the step of adjusting the flux control means comprises:
   - adjusting said control valve (11) to minimize variations of the fluid flux in said section (7).

5. The method of any one of claims 1-3, wherein the pipeline system (1) includes a gas/liquid separator (9) which is equipped with a gas outlet conduit (15) provided with a first control valve and a liquid outlet conduit (13) provided with a second control valve, and wherein the step of adjusting the flux control means comprises:

- adjusting said control valves to minimize variations of the fluid flux in said section (7).

6. The method of any one of claims 1-5, wherein the pipeline system (1) includes a pressure gauge (12) in said section (7), the method comprising the further steps of:
- measuring long term pressure changes with said pressure gauge (12); and
- adjusting the flux control means (11) so as to minimise said long term pressure changes.

7. A pipeline system (1) having means for preventing slug growth therein during simultaneous transportation of gas and liquid through the pipeline system (1), comprising:
- flux control means (11) for controlling fluxes of gas and liquid in a section (7) of the pipeline system (1);
- means for determining a fluid flux, defined as the sum of the fluxes of the gas and the liquid, in said section (1); and
- means for adjusting the flux control means (11) to minimize variations of the fluid flux in said section (7) using the measured fluid flux as an input for the flux control means adjustment.

8. The pipeline system of claim 7, wherein the flux control means comprise a control valve (11) at or near the downstream end of said section (7).

9. The pipeline system of claim 7, wherein the flux control means comprise a first control valve in a gas outlet conduit (15) and a second control valve in a liquid outlet conduit (13) of a gas/liquid separator (9) provided in the pipeline system (1).

10. The pipeline system of any one of claims 7-9, wherein the means for determining the fluid flux comprise a liquid volumetric flow meter (19) in a liquid outlet conduit (13) and a gas volumetric flow meter (17) in a gas outlet conduit (15) of a gas/liquid separator (9) which forms part of the pipeline system (1).

11. The pipeline system of any one of claims 7-10, wherein the means for adjusting the flux control means (11) comprise a regulating device (30) which receives input signals representing the fluid flux in said section (7).

12. The pipeline system of claim 11, wherein the regulating device (30) receives input signals from the liquid volumetric flow meter (19) and the gas volumetric flow meter (17).

13. The pipeline system of any one of claims 7-12, wherein said section (7) is formed by an end part of the pipeline system (1).

14. The pipeline system of any one of claims 7-13, wherein said section is formed by a riser (7) connected to an offshore platform (5).

15. The pipeline system of any one of claims 11-14, comprising a pressure gauge (12) for measuring long term pressure changes in said section (7), wherein the regulating device (30) receives input signals from said pressure gauge (12).

16. The pipeline system of any one of claims 7-15, wherein the flux control means comprise a control valve (11).

17. Means for preventing slug growth in the pipeline system of any one of claims 7-16, comprising:
- flux control means (11) for controlling fluxes of gas and liquid in a section (7) of the pipeline system (1);
- means for determining a fluid flux, defined as the sum of the fluxes of the gas and the liquid, in said section (7); and
- means for adjusting the flux control means (11) to minimize variations of the fluid flux in said section (7) using the measured fluid flux as an input for the flux control means adjustment.

**Patentansprüche**

1. Verfahren zum Verhindern des Anwachsens von Ablagerungen oder Ansammlungen in einem Rohrleitungssystem (1) während des gleichzeitigen Transports von Gas und Flüssigkeit durch das Rohrleitungssystem (1), wobei das Verfahren die Schritte umfaßt des:
- Vorsehens einer Strömungssteuereinrichtung (11) zum Steuern der Ströme von Gas und Flüssigkeit in einem Abschnitt (7) des Rohrleitungssystems (1);
- Bestimmens einer Fluidströmung, definiert als die Summe der augenblicklichen Ströme des Gases und der Flüssigkeit in dem genannten Abschnitt (7); und
- Einstellens der Strömungssteuereinrichtung (11), um Änderungen der Fluidströmung in dem genannten Abschnitt (7) zu minimieren unter Verwendung der gemessenen Fluidströmung als einen Eingang für die Einstellung der Strömungssteuereinrichtung.

2. Verfahren nach Anspruch 1, wobei der Schritt des Einstellens der Strömungssteuereinrichtung (11) ausgeführt wird unter Verwendung einer Reguliereinrichtung (30), welche Eingangssignale empfängt, die die Fluidströmung in dem genannten Abschnitt (7) darstellen.

3. Verfahren nach Anspruch 2, wobei das Rohrleitungssystem (1) einen Gas/Flüssigkeits-Separator (9) umfaßt, der mit einer Gasauslaßleitung (15) und einer Flussigkeitsauslaßleitung (13) ausgerüstet ist, und wobei die Schritte des Bestimmens der Fluidströmung und des Einstellens der Strömungssteuereinrichtung (11) umfassen:
    - Messen einer augenblicklichen Flüssigkeitsströmung mittels eines volumetrischen Flüssigkeitsdurchflußmeßgerätes (19) in der Flussigkeitsauslaßleitung (13) des Separators (9);
    - Messen einer augenblicklichen Gasströmung mittels eines volumetrischen Gasströmungsmeßgerätes (17) in der Gasauslaßleitung (15) des Separators (9);
    - Veranlassen der Reguliereinrichtung (30), die Fluidströmung zu bestimmen durch Addieren der gemessenen augenblicklichen Gasströmung und der gemessenen augenblicklichen Flüssigkeitsströmung;
    - Veranlassen der Reguliereinrichtung (30), ein zeitliches Mittel der Fluidströmung über ein relativ langes Zeitintervall zu berechnen;
    - Veranlassen der Reguliereinrichtung (30), die Strömungssteuereinrichtung (11) einzustellen, um eine Abweichung der Fluidströmung von dem zeitlichen Mittel der Strömung zu minimieren.

4. Verfahren nach irgendeinem der Ansprüche 1 bis 3, wobei das Rohrleitungssystem (1) ein Steuerventil (11) an oder nahe dem stromabwärtigen Ende des genannten Abschnitts (7) umfaßt, und wobei der Schritt des Einstellens der Strömungssteuereinrichtung umfaßt:
    - Einstellen des Steuerventils (11), um Änderungen der Fluidströmung in dem genannten Abschnitt (7) zu minimieren.

5. Verfahren nach irgendeinem der Ansprüche 1 bis 3, wobei das Rohrleitungssystem (1) einen Gas-/Flüssigkeits-Separator (9) umfaßt, der mit einer Gasauslaßleitung (15), die mit einem ersten Steuerventil versehen ist, und einer Flüssigkeitsauslaßleitung (13) ausgerüstet ist, die mit einem zweiten Steuerventil versehen ist, und wobei der Schritt des Einstellens der Strömungssteuereinrichtung umfaßt:
    - Einstellen der Steuerventile, um Änderungen der Fluidströmung in dem genannten Abschnitt (7) zu minimieren.

6. Verfahren nach irgendeinem der Ansprüche 1 bis 5, wobei das Rohrleitungssystem (1) ein Druckmeßgerät (12) in dem genannten Abschnitt (7) umfaßt, wobei das Verfahren die weiteren Schritte umfaßt des:
    - Messens von Langzeitdruckänderungen mit dem Druckmeßgerät (12); und des
    - Einstellens der Strömungssteuereinrichtung (11) derart, daß die Langzeitdruckänderungen minimiert werden.

7. Rohrleitungssystem (1), das Mittel hat zum Verhindern des Anwachsens von Ablagerungen oder Ansammlungen darin während gleichzeitigen Transports von Gas und Flüssigkeit durch das Rohrleitungssystem (1), umfassend:
    - eine Strömungssteuereinrichtung (11) zum Steuern der Ströme von Gas und Flüssigkeit in einem Abschnitt (7) des Rohrleitungssystems (1);
    - eine Einrichtung zum Bestimmen einer Fluidströmung, definiert als die Summe der Ströme des Gases und der Flüssigkeit in dem genannten Abschnitt (7); und
    - eine Einrichtung zum Einstellen der Strömungssteuereinrichtung (11) um Änderungen der Fluidströmung in dem genannten Abschnitt (7) zu minimieren unter Verwendung der gemessenen Fluidströmung als einen Eingang für die Einstellung der Strömungssteuereinrichtung.

8. Rohrleitungssystem nach Anspruch 7, wobei die Strömungssteuereinrichtung ein Steuerventil (11) an oder nahe dem stromabwärtigen Ende des genannten Abschnitts (7) aufweist.

9. Rohrleitungssystem nach Anspruch 7, wobei die Strömungssteuereinrichtung ein erstes Steuerventil in einer Gasauslaßleitung (15) und ein zweites Steuerventil in einer Flüssigkeitsauslaßleitung (13) eines Gas/Flüssigkeits-Separators (9) aufweist, der in dem Rohrleitungssystem (1) vorgesehen ist.

10. Rohrleitungssystem nach irgendeinem der Ansprüche 7 bis 9, wobei die Einrichtung zum Bestimmen der Fluidströmung ein volumetrisches Flüssigkeitsdurchflußmeßgerät (19) in einer Flussigkeitsauslaßleitung (13) und ein volumetrisches Gasströmungsmeßgerät (17) in einer Gasauslaßleitung (15) eines Gas/Flüssigkeits-Separators (9) aufweist, der einen Teil des Rohrleitungssystems (1) bildet.

11. Rohrleitungssystem nach irgendeinem der Ansprüche 7 bis 10, wobei die Einrichtung zum Einstellen der Strömungssteuereinrichtung (11) eine Reguliereinrichtung (30) aufweist, die Eingangssignale empfängt, welche die Fluidströmung in dem genannten Abschnitt (7) darstellen.

12. Rohrleitungssystem nach Anspruch 11, wobei die Reguliereinrichtung (30) Eingangssignale von dem volumetrischen Flüssigkeitsdurchflußmeßgerät (19) und von dem volumetrischen Gasstromungsmeßgerat (17) empfängt.

13. Rohrleitungssystem nach irgendeinem der Ansprüche 7 bis 12, wobei der genannte Abschnitt (7) durch einen Endteil des Rohrleitungssystems (1) gebildet ist.

14. Rohrleitungssystem nach irgendeinem der Ansprüche 7 bis 13, wobei der genannte Abschnitt durch ein Steigrohr (7) gebildet ist, welches mit einer Schelf-Plattform (5) verbunden ist.

15. Rohrleitungssystem nach irgendeinem der Ansprüche 11 bis 14, umfassend ein Druckmeßgerät (12) zum Messen von Langzeitdruckänderungen in dem genannten Abschnitt (7), wobei die Reguliereinrichtung (30) Eingangssignale von dem Druckmeßgerät (12) empfängt.

16. Rohrleitungssystem nach irgendeinem der Ansprüche 7 bis 15, wobei die Strömungssteuereinrichtung ein Steuerventil (11) aufweist.

17. Einrichtung zum Verhindern des Anwachsens von Ablagerungen oder Ansammlungen in dem Rohrleitungssystem nach irgendeinem der Ansprüche 7 bis 16, umfassend:
- eine Strömungssteuereinrichtung (11) zum Steuern der Strömungen von Gas und Flüssigkeit in einem Abschnitt (7) des Rohrleitungssystems (1);
- eine Einrichtung zum Bestimmen einer Fluidströmung, definiert als die Summe der Strömungen des Gases und der Flüssigkeit, in dem genannten Abschnitt (7); und
- eine Einrichtung zum Einstellen der Strömungssteuereinrichtung (11), um Änderungen der Fluidströmung in dem genannten Abschnitt (7) zu minimieren unter Verwendung der gemessenen Fluidströmung als einen Eingang für die Einstellung der Strömungssteuereinrichtung.

**Revendications**

1. Procédé destiné à empêcher le développement de boues dans un ensemble (1) de canalisations pendant un transport simultané de gaz et de liquide à travers l'ensemble (1) de canalisations, le procédé comportant les opérations consistant à :
- fournir des moyens (11) de régulation de flux destinés à réguler les flux de gaz et de liquide circulant dans une portion (7) de l'ensemble (1) de canalisations;
- déterminer un flux fluide, défini comme la somme des flux instantanés du gaz et du liquide, circulant dans ladite portion (7); et
- ajuster les moyens (11) de régulation de flux de façon à minimiser les variations du flux fluide circulant dans ladite portion (7) en utilisant le flux fluide mesuré comme une donnée d'entrée pour l'ajustement des moyens de régulation de flux.

2. Procédé selon la revendication 1, dans lequel l'opération consistant à ajuster les moyens (11) de régulation de flux est mise en oeuvre grâce à l'utilisation d'un dispositif régularisateur (30) qui reçoit des signaux d'entrée représentant le flux fluide circulant dans ladite portion (7).

3. Procédé selon la revendication 2, dans lequel l'ensemble (1) de canalisations comprend un dispositif (9) de séparation gaz/liquide qui est muni d'un tuyau (15) de sortie du gaz et d'un tuyau (13) de sortie du liquide, et dans lequel les opérations consistant à déterminer le flux fluide et à ajuster les moyens (11) de régulation de flux comportent :
- le mesurage d'un flux liquide instantané au moyen d'un dispositif de mesure (19) de l'écoulement volumétrique situé dans le tuyau (13) de sortie du liquide du dispositif de séparation;
- le mesurage d'un flux gazeux instantané au moyen d'un dispositif de mesure (17) de l'écoulement volumétrique situé dans le tuyau (15) de sortie du gaz du dispositif (9) de séparation;
- l'action d'amener le dispositif régularisateur (30) à déterminer le flux fluide en additionnant les flux de gaz et de liquide mesurés de manière instantanée;
- l'action d'amener le dispositif régularisateur (30) à calculer une moyenne au cours du temps du flux fluide sur un intervalle de temps relativement long;
- l'action d'amener le dispositif régularisateur (30) à ajuster les moyens (11) de régulation de flux de façon à minimiser un écart du flux fluide par rapport à ladite moyenne au cours du temps dudit flux.

4. Procédé selon l'une quelconque des revendications 1 - 3, dans lequel l'ensemble (1) de canalisations comprend un robinet-vanne (11) de régulation situé au droit de ou près de l'extrémité aval de ladite portion (7), et dans lequel l'opération consistant à ajuster les moyens de régulation de flux comporte :
    - l'ajustement dudit robinet-vanne (11) de régulation de façon à minimiser les variations du flux fluide circulant dans ladite portion (7).

5. Procédé selon l'une quelconque des revendications 1 - 3 , dans lequel l'ensemble (1) de canalisations comprend un dispositif (9) de séparation gaz/liquide qui est muni d'un tuyau (15) de sortie du gaz pourvu d'un premier robinet-vanne de régulation et d'un tuyau (13) de sortie du liquide pourvu d'un second robinet-vanne de régulation, et dans lequel l'opération consistant à ajuster les moyens de régulation de flux comporte :
    - l'ajustement desdits robinets-vannes de régulation de façon à minimiser les variations du flux fluide circulant dans ladite portion (7).

6. Procédé selon l'une quelconque des revendications 1 - 5, dans lequel l'ensemble (1) de canalisations comprend un manomètre (12) situé dans ladite portion (7), le procédé comportant en outre les opérations consistant à :
    - mesurer les changements de pression à long terme avec ledit manomètre (12); et
    - ajuster les moyens (11) de régulation de flux de manière à minimiser lesdits changements de pression à long terme.

7. Ensemble (1) de canalisations possédant des moyens destinés à y empêcher le développement de boues pendant un transport simultané de gaz et de liquide à travers l'ensemble (1) de canalisations, comportant :
    - des moyens (11) de régulation de flux destinés à réguler les flux de gaz et de liquide circulant dans une portion (7) de l'ensemble (1) de canalisations;
    - des moyens destinés à déterminer un flux fluide, défini comme la somme des flux du gaz et du liquide, circulant dans ladite portion (7); et
    - des moyens destinés à ajuster les moyens (11) de régulation de flux de façon à minimiser les variations du flux fluide circulant dans ladite portion (7) en utilisant le flux fluide mesuré comme une donnée d'entrée pour l'ajustement des moyens de régulation de flux.

8. Ensemble de canalisations selon la revendication 7, dans lequel les moyens de régulation de flux comportent un robinet-vanne (11) de régulation situé au droit de ou près de l'extrémité aval de ladite portion (7).

9. Ensemble de canalisations selon la revendication 7, dans lequel les moyens de régulation de flux comportent un premier robinet-vanne de régulation situé dans un tuyau (15) de sortie du gaz et un second robinet-vanne de régulation situé dans un tuyau (13) de sortie du liquide d'un dispositif (9) de séparation gaz/liquide disposé dans l'ensemble (1) de canalisations.

10. Ensemble de canalisations selon l'une quelconque des revendications 7 - 9 , dans lequel les moyens destinés à déterminer le flux fluide comportent un dispositif de mesure (19) de l'écoulement volumétrique du liquide situé dans un tuyau (13) de sortie du liquide et un dispositif de mesure (17) de l'écoulement volumétrique du gaz situé dans un tuyau (15) de sortie du gaz d'un dispositif (9) de séparation gaz/liquide qui constitue une partie de l'ensemble (1) de canalisations.

11. Ensemble de canalisations selon l'une quelconque des revendications 7 - 10 , dans lequel les moyens destinés à ajuster les moyens (11) de régulation de flux comportent un dispositif régularisateur (30) qui reçoit des signaux d'entrée représentant le flux fluide circulant dans ladite portion (7).

12. Ensemble de canalisations selon la revendication 11, dans lequel le dispositif régularisateur (30) reçoit des signaux d'entrée provenant du dispositif de mesure (19) de l'écoulement volumétrique du liquide et du dispositif de mesure (17) de l'écoulement volumétrique du gaz.

13. Ensemble de canalisations selon l'une quelconque des revendications 7 - 12 , dans lequel ladite portion (7) est constituée par une partie d'extrémité de l'ensemble (1) de canalisations.

14. Ensemble de canalisations selon l'une quelconque des revendications 7 - 13 , dans lequel ladite portion est constituée par une colonne montante (7) raccordée à une plate-forme (5) en mer.

15. Ensemble de canalisations selon l'une quelconque des revendications 11 - 14 , comportant un manomètre (12) destiné à mesurer les changements de pression à long terme dans ladite portion (7), dans lequel le dispositif régularisateur (30) reçoit des signaux d'entrée provenant dudit manomètre (12).

16. Ensemble de canalisations selon l'une quelconque des revendications 7 - 15 , dans lequel les moyens de régulation de flux comportent un robinet-vanne (11) de régulation.

17. Moyens destinés à empêcher le développement de boues dans un ensemble de canalisations selon l'une quelconque des revendications 7 - 16 , comportant :
- des moyens (11) de régulation de flux destinés à réguler les flux de gaz et de liquide circulant dans une portion (7) de l'ensemble (1) de canalisations;
- des moyens destinés à déterminer un flux fluide, défini comme la somme des flux du gaz et du liquide, circulant dans ladite portion (7); et
- des moyens destinés à ajuster les moyens (11) de régulation de flux de façon à minimiser les variations du flux fluide circulant dans ladite portion (7) en utilisant le flux fluide mesuré comme une donnée d'entrée pour l'ajustement des moyens de régulation de flux.

FIG.1